(19) Europäisches Patentamt

European Patent Office

Office européen des brevets

(11) **EP 1 643 694 A2**

(12) **EUROPEAN PATENT APPLICATION**

(43) Date of publication:
**05.04.2006 Bulletin 2006/14**

(51) Int Cl.:
***H04L 12/56*** *(2006.01)*

(21) Application number: **05021526.8**

(22) Date of filing: **30.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.09.2004 KR 2004078095**
**22.03.2005 KR 2005023563**

(71) Applicant: **Samsung Electronics Co., Ltd.**
**Suwon-si, Gyeonggi-Do (KR)**

(72) Inventors:
• **Kim, Soeng-Hun**
**Yeongtong-gu,**
**Suwon-si,**
**Gyeonggi-do (KR)**
• **Lee, Kook-Heui**
**Yeongtong-gu,**
**Suwon-si,**
**Gyeonggi-do (KR)**
• **Choi, Sung-Ho**
**Yeongtong-gu,**
**Suwon-si,**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Method and apparatus for transmitting uplink nonscheduled data in a mobile communication system**

(57) An apparatus and method for defining non-scheduled data for autonomous transmission without Node B-controlled scheduling and notifying the non-scheduled data in a mobile communication system supporting an uplink packet data service are provided. An Radio Network Controller (RNC) includes in an Enhanced Uplink Dedicated CHannel (E-DCH) setup message minimum set information indicating whether each transmittable Media Access Control-data (MAC-d) flow can be transmitted without a scheduling command from a Node B. The minimum set information may containing a maximum allowed Media Access Control-enhanced Protocol Data Unit (MAC-e PDU) size for the MAC-d flow. In the presence of data in the MAC-d flow indicated by the minimum set information, a User Equipment (UE) transmits the MAC-d flow data on the uplink even without transmission resources allowed by the scheduling command from the Node B.

FIG.4

EP 1 643 694 A2

**Description**

BACKGROUND OF THE INVENTION

Field of the Invention

The present invention relates generally to a mobile communication system for transmitting packet data on the uplink. In particular, the present invention relates to a method and apparatus for efficiently transmitting uplink data according to a minimum set without Node B-controlled scheduling.

Description of the Related Art

An asynchronous Wideband Code Division Multiple Access (WCDMA) communication system uses an Enhanced Uplink Dedicated CHannel (E-DCH or EUDCH) to support high-speed packet data service on the uplink. The E-DCH was proposed to improve the performance of uplink packet transmission in asynchronous CDMA communication systems.

The E-DCH mobile communication system adopts Node B-controlled scheduling and Hybrid Automatic Repeat Request (HARQ) in order to maximize the efficiency of uplink transmission. The Node B-controlled scheduling is a scheme of controlling uplink transmissions from User Equipments (UEs) based on feedback information about the channel conditions and buffer statuses of the UEs in a Node B. The Node B allows transmission of a large volume of data for UEs at a good channel condition and transmission of a minimum volume of data for UEs at a bad channel condition, for efficient use of limited uplink transmission resources. The HARQ scheme increases a transmission success rate with respect to transmit power between the UE and the Node B. The Node B soft-combines an erroneous data block with its retransmitted data block, thus increasing the reception success probability of the data block.

Because orthogonality is not kept among uplink signals from a plurality of UEs, the uplink signals interfere with one another. Thus, as more uplink signals are transmitted, interference with an uplink signal from a particular UE increases. Also, as the interference increases, the reception performance of the Node B decreases. In this context, the Node B limits the amount of uplink signals to be received to ensure total reception performance. Radio resources available to the Node B are expressed by Equation (1) below.

$$ROT = I_o/N_O \ldots \ldots (1)$$

where $I_o$ denotes the received total wideband power spectral density of the Node B, and No denotes the thermal power spectral density of the Node B. ROT, which stands for Rise Over Thermal, represents radio resources available to the Node B, for the E-DCH packet data service on the uplink.

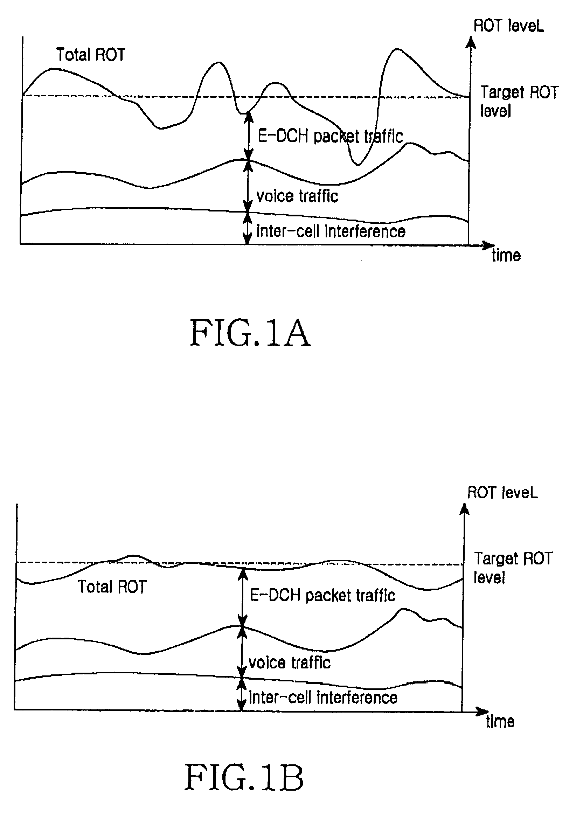

FIGs. 1A and 1B are graphs illustrating changes in uplink radio resources available to the Node B.

Referring to FIGs. 1A and 1B, the total uplink radio resources available to the Node B are expressed as the sum of Inter-Cell Interference (ICI), voice traffic, and E-DCH packet traffic. FIG 1A illustrates the change of the total ROT in the Node B when Node B-controlled scheduling is not performed. Because the E-DCH packet traffic is not scheduled, a plurality of UEs can transmit packet data at high rates at the same time, increasing the total ROT beyond a target ROT. As a result, the reception performance of uplink signals is decreased.

FIG 1B illustrates the change of the total ROT in the Node B when Node B-controlled scheduling is performed. The Node B-controlled scheduling prevents a plurality of UEs from simultaneously transmitting packet data at high data rates. With the Node B-controlled scheduling, if a high data rate is allowed for a particular UE, low data rates are allocated to other UEs in order to maintain the total ROT below the target ROT.

If a particular UE transmits data at a higher data rate, the Node B receives the data from the UE with increased reception power, which implies that the ROT of the UE occupies much of the total ROT. ON the other hand, if the data rate of another UE decreases, the reception power of the Node B for the UE becomes smaller. Thus, the Node B performs Node B-controlled scheduling on E-DCH packet data, taking into account the relationship between data rate and radio resources and UE-requested data rates.

Through Node B-controlled scheduling, the Node B notifies individual UEs using the E-DCH whether they are allowed to transmit E-DCH data or adjusts their E-DCH data rates based on the requested data rates or channel conditions of the UEs. Hence, the Node B-controlled scheduling is the process of distributing ROT to the UEs based on their channel conditions and buffer statuses.

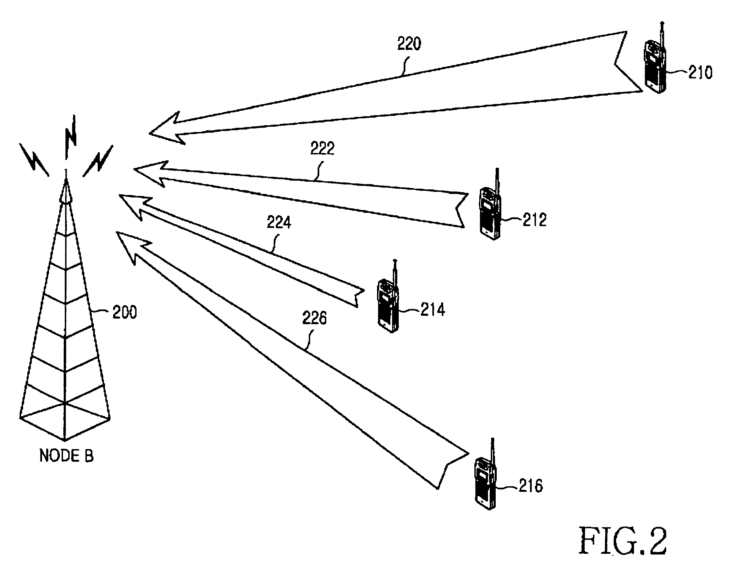

FIG 2 illustrates uplink packet data transmission from UEs to a Node B.

Referring to FIG 2, UEs 210 to 216 are transmitting uplink packet data at different transmit power levels 220 to 226 according to their distances to a Node B 200. The remotest UE 210 transmits packet data with the highest transmit power 220, while the nearest UE 214 transmits packet data with the lowest transmit power 224. The Node B 200 may schedule uplink packet data such that transmit power is inversely proportional to data rate, in order to improve system performance without increasing ICI to other cells. Therefore, the Node B 200 allocates less transmission resources to a UE with higher uplink transmit power and more transmission resources to a UE with lower uplink transmit power, thereby efficiently maintaining the total ROT.

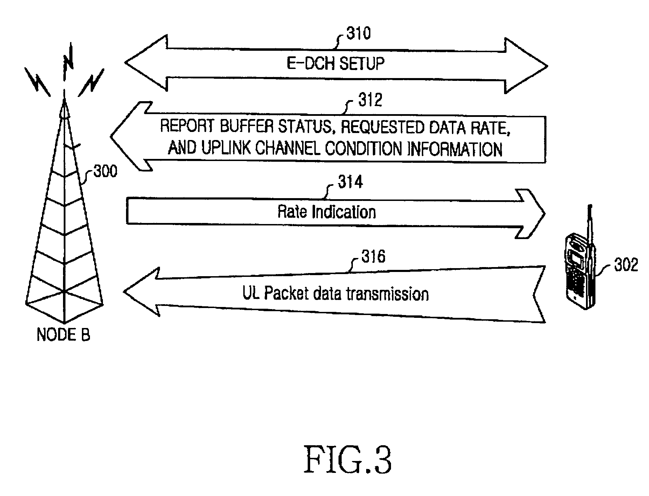

FIG 3 is a diagram illustrating a signal flow for allocating resources for transmission of E-DCH packet data to a UE by a Node B and transmitting the E-DCH packet data using the allocated resources by the UE.

Referring to FIG 3, a Node B 300 and a UE 302 establish the E-DCH between them in step 310. Step 310 involves transmission of messages on dedicated transport channels. After the E-DCH setup, the UE 302 transmits information about required transmission resources and uplink channel condition to the Node B 300 in step 312. The information includes the uplink transmit power, transmit power margin, and buffer status information of the UE 302.

Upon receipt of the information, the Node B 300 performs Node B-controlled scheduling by comparing the uplink transmit power with a measured reception power. If the difference between the uplink transmit power and the uplink reception power is narrow, the uplink channel condition is good. If the different is wide, it means that the uplink channel condition is bad. In the case where the UE 302 tells the Node B 300 its transmit power margin, the Node B 300 estimates the uplink channel condition by subtracting the transmit power margin from a known maximum transmit power. The Node B 300 decides as to transmission resources available for the E-DCH of the UE 302 based on the estimated channel condition and the buffer status information of the UE 302.

In step 314, the Node B 300 notifies the UE 302 of the decided transmission resources. At the same time, the Node B 300 transmits a rate indication indicating an allowed data size or information about an allowed transmit power. The UE 302 determines the size of packet data to be transmitted with the notified transmission resources and transmits packet data of the determined size to the Node B 300 in step 316. A packet data unit transmitted on the E-DCH is called a Media Access Control-enhanced Protocol Data Unit (MAC-e PDU).

In the mobile communication system using the uplink dedicated channel configured as described above, the UE needs to have a minimum set defining at least one data property which allows the UE to transmit data set as the minimum set all the time irrespective of allowed transmission resources or available transmit power. Accordingly, a need exists for a technique of more efficiently deciding data as a minimum set and notifying the data decided as a minimum set in a mobile communication system supporting the E-DCH.

## SUMMARY OF THE INVENTION

An object of the present invention is to address at least the above problems. Accordingly, an object of the present invention is to provide a method and apparatus for defining an E-DCH minimum set in a mobile communication system supporting an E-DCH.

Another object of the present invention is to provide a method and apparatus for defining an E-DCH minimum set considering data property.

A further object of the present invention is to provide a method and apparatus for increasing the use efficiency of the uplink by specifying data that can be transmitted as an E-DCH minimum set.

The above objects are achieved by, for example, providing an apparatus and method for defining non-scheduled data for autonomous transmission without Node B-controlled scheduling and notifying the non-scheduled data in a mobile communication system supporting an uplink packet data service.

According to one exemplary aspect of the present invention, in a method of supporting uplink data transmission without Node B-controlled scheduling in a mobile communication system, a MAC-d flow transmittable without a scheduling command from a Node B is defined. Minimum set information is set in configuration information for configuring the MAC-d flow. The minimum set information indicates that the MAC-d flow can be transmitted without the scheduling command from the Node B. The configuration information including the minimum set information is transmitted to a UE by a setup message for setting up the MAC-d flow.

According to another exemplary aspect of the present invention, in an apparatus for supporting uplink data transmission without Node B-controlled scheduling in a mobile communication system, a controller defines a MAC-d flow transmittable without a scheduling command from a Node B. A minimum set information generator sets minimum set information in configuration information for configuring the MAC-d flow. The minimum set information indicates that the MAC-d flow can be transmitted without the scheduling command from the Node B. A message transmitter transmits to a UE the configuration information including the minimum set information by a setup message for setting up the MAC-d flow.

According to a further exemplary aspect of the present invention, in a method of transmitting uplink data without Node B-controlled scheduling in a mobile communication system, configuration information of a MAC-d flow is set, including minimum set information indicating that the MAC-d flow can be transmitted without a scheduling command from a Node B. It is determined whether the MAC-d flow has data, in the absence of transmission resources allowed for a new transmission period by the scheduling command from the node B. If the MAC-d flow has data, the data is transmitted on an uplink in the new transmission period without the scheduling command from the Node B.

According to still another exemplary aspect of the present invention, in an apparatus for transmitting uplink data without Node B-controlled scheduling in a mobile communication system, a message receiver receives configuration information of a MAC-d flow, including minimum set information indicating that the MAC-d flow can be transmitted without a scheduling command from a Node B. A controller determines whether the MAC-d flow has data in the absence of transmission resources allowed for a new transmission period by the scheduling command from the node B. A data transmitter transmits the data on an uplink in the new transmission period without the scheduling command from the Node B if the MAC-d flow has data.

## BRIEF DESCRIPTION OF THE DRAWINGS

The above and other objects, features and advantages of the present invention will become more apparent from the following detailed description when taken in conjunction with the accompanying drawings in which like reference symbols indicate the same or similar components, wherein:

FIG 1A is a graph illustrating the change of uplink resources in a Node B when Node B-controlled scheduling is not performed;
FIG 1B is a graph illustrating the change of uplink resources in the Node B when Node B-controlled scheduling is performed;
FIG 2 illustrates uplink packet data transmission from UEs to the Node B;
FIG 3 illustrates information transmitted/received between a UE and the Node B, for uplink packet transmission;
FIG 4 is a block diagram of a UE according to an exemplary embodiment of the present invention;
FIG 5 is a diagram illustrating a signal flow for notifying the UE of a defined E-DCH minimum set by a network according to an exemplary embodiment of the present invention;
FIG 6 is a flowchart illustrating E-DCH minimum set transmission from the UE according to another exemplary embodiment of the present invention;
FIG 7 is a diagram illustrating a signal flow for defining an E-DCH minimum set, deciding a MAC-e PDU size for minimum set transmission and notifying the minimum set and the MAC-e PDU size according to a further exemplary embodiment of the present invention;
FIG 8 is a block diagram of a transmitter in an RNC, for defining an E-DCH minimum set and notifying the E-DCH minimum set according to an exemplary embodiment of the present invention; and
FIG 9 is a block diagram of a receiver in the UE, for minimum set transmission of the E-DCH according to an exemplary embodiment of the present invention.

## DETAILED DESCRIPTION OF EXEMPLARY EMBODIMENTS

Certain exemplary embodiments of the present invention will be described herein below with reference to the accompanying drawings. In the following description, well-known functions or constructions are omitted for conciseness and clarity.

An exemplary implementation of the present invention as described below is characterized mainly in that an E-DCH supporting mobile communication system defines an E-DCH minimum set indicating data types that a UE is allowed to transmit autonomously without Node B-controlled scheduling, and notifies the UE of the E-DCH minimum set. Thus, an exemplary implementation of the present invention involves an operation for notifying the UE of data types transmittable as the minimum set by the system and an operation for determining data to be transmitted for the next transmission period, taking into account the minimum set by the UE.

The following description of an uplink packet data service is made in the context of the E-DCH of a 3$^{rd}$ generation mobile communication system, Universal Mobile Telecommunication Service (UMTS). Yet, the present invention is not limited to the UMTS system and associated standards, and thus, it is to be understood that the present invention is applicable to any communication system that operates in the following way.

A UMTS Terrestrial Radio Access Network (UTRAN) includes Node Bs each having a plurality of cells and Radio Network Controllers (RNCs) for managing radio resources for the cells. A UE is located in one of the cells and conducts communications through the Node Bs and the RNCs.

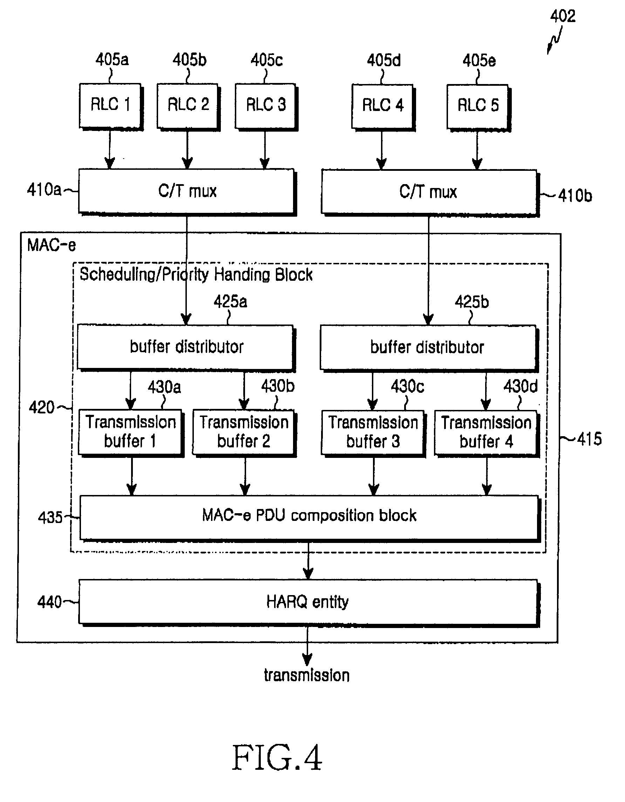

FIG. 4 is a block diagram of a UE supporting an uplink packet data service according to an exemplary embodiment of the present invention.

Referring to FIG. 4, a UE 402 includes Radio Link Control (RLC) entities 405a through 405e (collectively denoted below by reference numeral 405) for generating uplink transmission data, a Control and Traffic multiplexer (C/T MUX) 410a and 410b (collectively denoted below by reference numeral 410) for inserting multiplexing information into the uplink transmission data and multiplexing the resulting data, and a Media Access Control-enhanced/Serving RNC (MAC-e/es) layer 415 for generating MAC-e PDUs from the multiplexed data according to the characteristics of the E-DCH.

The RLC entities 405 are configured according to logical channels or radio bearers. They store data generated from an upper layer and constructs the stored data to a size suitable for wireless transmission. A radio bearer refers to an RLC layer and an upper layer configured to process data from a predetermined application. A logical channel is configured between the RLC layer and a MAC layer. One logical channel is established per radio bearer.

The C/T MUXes 410 insert multiplexing information into data received from the RLC layer 405. The multiplexing information can be the identifier (ID) of a logical channel. A Node B delivers received data to an appropriate receiving RLC layer referring to the multiplexing information. The C/T MUXes 410 are called a MAC-data (MAC-d) layer and the output of each C/Y MUX 410 is called a MAC-d flow.

The MAC-e layer 415 is provided with a scheduling/priority handling block 420, a MAC-e PDU composition block 435, and an HARQ entity 440.

The scheduling/priority handling block 420 schedules data to be transmitted for the next transmission period, considering the priority levels of logical channels mapped to the E-DCH. The scheduling/priority handling block 420 includes buffer distributors 425a and 425b (collectively denoted below by reference numeral 425) and transmission buffers 430a to 430d (collectively denoted below by reference numeral 430). The transmission buffers 430 buffer the data received from the RLC layer 405 according to their priority levels or according to their MAC-d flows, prior to transmission. The logical channels are prioritized. Each transmission buffer 430 stores data of logical channels with the same priority level. In other words, each transmission buffer 430 buffers the data of logical channels corresponding to the same MAC-d flow.

The logical channels are divided into MAC-d flows according to their Quality of Service (QoS) requirements. Logical channels requiring the same QoS is classified into one MAC-d flow and the MAC-e layer 415 can provide a different QoS for each MAC-d flow. The QoS can be adjusted by the number of HARQ retransmission or transmit power, for example.

The transmission buffers 430 function to buffer data until transmission. Since RLC buffers exit in the RLC layer 405, they can be used as the transmission buffers 430. Therefore, the transmission buffers can be configured in the MAC-e structure.

The transmission buffers may be configured in the MAC-e layer according to priority levels.

The transmission buffers may be configured in the MAC-e layer according to MAC-d flows.

Existing RLC buffers may be used without configuring additional buffers in the MAC-e layer.

Selection of any of the above methods does not affect the operation of the exemplary embodiments of the present invention. Thus, a transmission buffer used herein is configured in one of the three exemplary methods. In the illustrated case of FIG 4, the transmission buffers 320 are configured according to Method 2.

The buffer distributors 425 deliver the multiplexed data from the C/T MUXes 410 to appropriate transmission buffers. The buffer distributors 425 exist only when the transmission buffers 430 are provided in the MAC-e layer 415.

The MAC-e PDU composition block 435 constructs MAC-e PDUs with data received from the transmission buffers 430. A MAC-e PDU is a packet transmitted on a radio channel, comprised of a header and payload. The data buffered in the transmission buffers 430 are filled in the payload. Since the data buffered in the transmission buffers are delivered from the C/T MUXes 410 in the MAC-d layer, they are called MAC-d PDUs.

The HARQ entity 440 is responsible for controlling HARQ transmission and retransmission.

As described above, the UE buffers MAC-d PDUS to be transmitted in the transmission buffers. If the Node B allocates transmission resources to the UE in response to a request from the UE, the UE transmits MAC-e PDUs according to the transmission resources.

In the E-DCH communication scheme, it may not be preferable to transmit delay-sensitive data or relative important data after requesting scheduling of the data.

For example, a Radio Resource Control (RRC) message may be transmitted for signaling between the UE and the RNC, immediately after it is generated. Transmission of the RRC message after resource allocation from the Node B may incur too a long delay. A technique of transmitting such delay-sensitive data or significant data as a minimum set is under discussion. The minimum set refers to data that the UE can autonomously transmit regardless of available radio resources, that is, scheduling in the Node B, even without sufficient transmit power. In another case, the minimum set can be defined as the smallest MAC-e PDU on the E-DCH. In other words, irrespective of what type of data is included in a MAC-e PDU, if the MAC-e PDU is of the smallest size, it can be regulated so that transmission of the MAC-e PDU is allowed all the time.

Discriminate transmission of data corresponding to a minimum set is called minimum set transmission or non-scheduled transmission. Such data can be transmitted within a predetermined bit size, even though the Node B does not transmit a scheduling command about the data.

Considering the minimum set is transmitted without permission from the Node B, it is preferable to minimize data to be set as the minimum set. For example, it is not preferable to transmit delay-insensitive data such as File Transfer Protocol (FTP) data as a minimum set. Thus, only significant data must be transmitted as a minimum set, such as the RRC message. In this context, the RNC sets data as a minimum set in the manner that increases the efficiency of minimum set transmission.

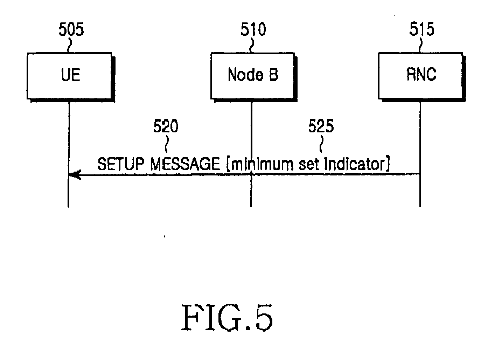

FIG 5 is a diagram illustrating a signal flow for defining E-DCH minimum set transmission in the network according to an exemplary embodiment of the present invention. Reference numeral 505 denotes a UE, reference numeral 510 denotes a Node B to communicate with the UE 505, and reference numeral 515 denotes an RNC for controlling communications between the Node B 510 and the UE 505.

Referring to FIG 5, the RNC 515 specifies data to be transmitted as a minimum set in the following three ways.

Select at least one logical channel for transmission as a minimum set.

Select at least one MAC-d flow for transmission as a minimum set.

Select at least one transmission buffer for transmission as a minimum set.

At an E-DCH setup, the RNC 515 includes a minimum set indicator 525 defining data to be transmitted as a minimum set in an E-DCH setup message.

For example, the RNC 515 includes the minimum set indicator 525 indicating the data of a logical channel as a minimum set in a setup message of the logical channel. For another example, the RNC 515 includes the minimum set indicator 525 indicating data from a MAC-d flow as a minimum set in a setup message of the MAC-d flow. Finally, the RNC 515 includes the minimum set indicator 525 indicating the data of a transmission buffer as a minimum set in a setup message of the transmission buffer.

The RNC 515 sets as a minimum set a particular logical channel, a particular MAC-d flow, or a particular transmission buffer considered to be more important than any other logical channel, MAC-d flow, or transmission buffer. The RNC 515 then includes in a radio bear setup message, an E-DCH setup message, or a radio bear reconfiguration message 520, configuration information of a logical channel, MAC-d flow or transmission buffer to be configured and a minimum set indicator 525 indicating whether it can be transmitted as the minimum set. The minimum set indicator can be included in the configuration information. The RNC 515 can set one or more objects as the minimum set.

Upon receipt of the setup message 520, the UE 505 configures the logical channel, the MAC-d flow or the transmission buffer according to the configuration information. The UE 505 then checks the object to be transmitted as the minimum set by reading the minimum set indicator 525 or determining the presence or absence of the minimum set indicator 525. The UE 505 finds out from the minimum set indicator 525 that data from the logical channel, the MAC-d flow or the transmission buffer can be transmitted as the minimum set.

Data that can be transmitted as a minimum set is called a minimum set PDU. Thus, the minimum set PDU is data of a logical channel, a MAC-d flow, or a transmission buffer indicated by the RNC.

While the UE 505 cannot transmit data from other logical channels, MAC-e flows, or transmission buffers which are not set as the minimum set due to no permission from the Node B 510 or insufficient transmit power, it can transmit data set as the minimum set directly without awaiting Node B-controlled scheduling.

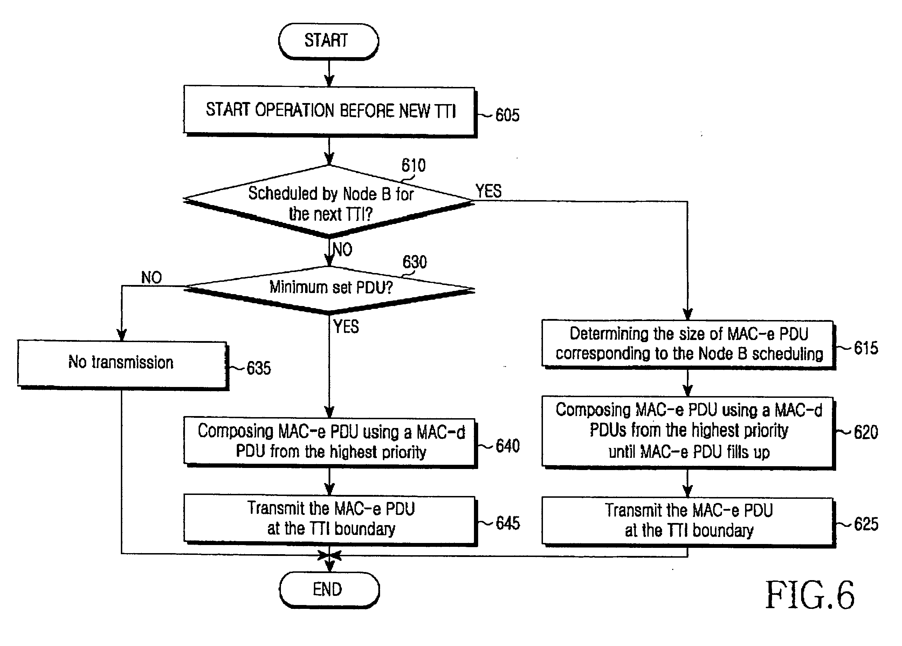

FIG 6 is a flowchart illustrating E-DCH minimum set transmission from the UE according to an exemplary embodiment of the present invention. It is assumed that the UE has transmission buffers in the MAC-e layer. However, the following operation can be performed without much modification even if the transmission buffers are replaced with RLC buffers.

The UE first receive the setup message 520 illustrated in FIG 5 and configures a corresponding MAC-d flow, logical channel or transmission buffer. Every Transmission Time Interval (TTI), the UE constructs a MAC-e PDU within transmission resources allowed by the Node B. When constructing a MAC-e PDU for transmission in the next TTI, the UE determines from which transmission buffer PDUs are to be transmitted before the next TTI starts in the following procedure. This procedure is performed in the MAC-e layer of the UE before a new TTI starts.

Referring to FIG 6, the UE begins scheduling shortly before a new TTI starts in step 605. In step 610, the UE determines whether there are transmission resources allowed by a scheduling command from a Node B scheduler and/or there is available transmit power.

In the presence of allowed transmission resources and available transmit power, the UE determines the size of a MAC-e PDU transmittable with the transmission resources in step 615. The UE reads out data with the highest priority level from a corresponding buffer and fills it in the payload of the MAC-e PDU in step 620. Step 620 lasts until the MAC-e PDU is filled up to the determined size. In step 625, the UE transmits the MAC-e PDU to the Node B on the uplink in the new TTI.

Meanwhile, if no transmission resources are allowed or transmit power is not available for the new TTI in step 610, the UE determines whether there is any minimum set PDU in the transmission buffers in step 630. The UE determines data in a MAC-d flow, a logical channel or a transmission buffer indicated by a minimum set indicator received from the RNC as a minimum set. In the absence of a minimum set PDU, the UE transmits no data in the new TTI in step 635.

On the other hand, in the presence of a minimum set PDU in step 630, the UE constructs a MAC-e PDU by filling a minimum set PDU with the highest priority level in the payload of the MAC-e PDU in step 640. Here, the MAC-e PDU is of the smallest size allowed for the E-DCH. In step 645, the UE transmits the MAC-e PDU in the new TTI.

In this way, the UE is allowed to transmit a predetermined minimum set PDU despite the absence of allowed transmission resources. Notably, one minimum set PDU with the highest priority level rather than all minimum set PDUs buffered in the transmission buffers is transmitted.

While minimum set transmission is allowed for a particular logical channel, MAC-d flow, or transmission buffer in the above-described embodiment, a description will be made below of setting a specific MAC-d flow as a minimum set. Many types of MAC-d flows can be configured for one UE and various services can be mapped to each MAC-d flow. Each service may require a different transmission property. Therefore, if a particular MAC-d flow is set as a minimum set, the size of a MAC-e PDU that can carry the MAC-d flow is preferably decided.

In an alternative exemplary embodiment of the present invention, a MAC-d flow is set as a minimum set and an allowed size of a MAC-e PDU for minimum set transmission is decided as well.

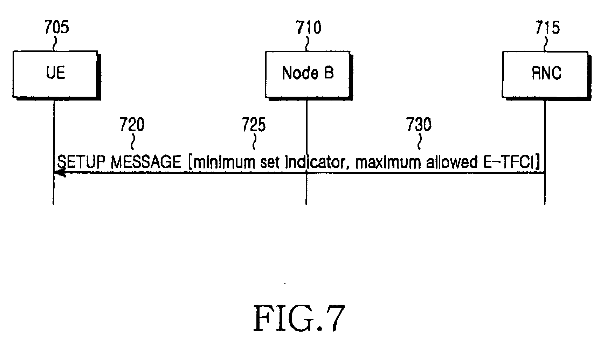

FIG 7 is a diagram illustrating a signal flow for setting an E-DCH minimum set and a MAC-e PDU size for minimum set transmission and notifying the information according to the alternative exemplary embodiment of the present invention. Reference numeral 705 denotes a UE, reference numeral 710 denotes a Node B to communicate with the UE 705, and reference numeral 715 denotes an RNC for controlling communications between the Node B 710 and the UE 705.

Referring to FIG 7, at an E-DCH setup, the RNC 715 includes MAC-d flow configuration information in an E-DCH setup message 720. The MAC-d flow configuration information contains, for example, mapping information (not shown) indicating logical channels mapped onto a MAC-d flow, a minimum set indicator 725 indicating whether minimum set transmission is allowed for the MAC-d flow, and a maximum allowed E-DCH Transport Format Combination Indicator (E-TFCI) indicating a maximum MAC-e PDU size allowed for minimum set transmission. The E-TFCI is a logical ID indicating a MAC-e PDU size. According to another exemplary embodiment, MAC-d flow configuration information has information about a maximum MAC-e PDU size instead of the maximum allowed E-TFCI.

When setting up the E-DCH for the UE 705, the RNC 715 determines whether there is a logical channel requiring minimum set transmission among logical channels configured for the UE 705. For example, a Dedicated Control CHannel (DCCH) for delivering an RRC message associated with an RRC connection between the UE 705 and the RNC 715 needs minimum set transmission. The RNC 715 includes the minimum set indicator 725 and the maximum allowed E-TFCI 730 in configuration information of a MAC-d flow connected to the logical channel. The maximum allowed E-TFCI 730 indicates an E-TFC having a maximum data size among E-TFCs available for minimum set transmission.

E-TFCIs are ordered in an ascending order of MAC-e PDU size. If MAC-e PDU sizes available to the UE 705 are 100 bits, 200 bits, 300 bits, 400 bits, and 500 bits, E-TFCI 0 indicates 100 bits, E-TFCI 1 indicates 200 bits, E-TFCI 2 indicates 300 bits, E-TFCI 3 indicates 00 bits, and E-TFCI 4 indicates 500 bits. If the maximum allowed E-TFCI 730 is E-TFCI 1, a corresponding MAC-d flow is carried by minimum set transmission according to E-TFCI 0 or E-TFCI 1. Thus, the UE 705 transmits a 100- or 200-bit MAC-e PDU as a minimum set.

The RNC 715 takes into account the following considerations when determining MAC-d flow configuration information.

For a MAC-d flow for which minimum set transmission is allowed, a maximum allowed E-TFCI is set in the MAC-d flow configuration information. For a non-minimum set transmittable MAC-d flow, a maximum allowed E-TFCI is not set.

For a MAC-d flow for which minimum set transmission is allowed, considering the QoS requirement of a logical channel connected to the MAC-d flow, an E-TFCI indicating a MAC-e PDU size fulfilling the QoS requirement is set as a maximum allowed E-TFCI. For example, if the logical channel requires a 10kbps fixed bandwidth, an E-TFCI indicating 100 bits for a 10msec TTI is set as the maximum allowed E-TFCI for the MAC-d flow.

Upon receipt of the E-DCH setup message 720, if the MAC-d flow configuration information includes the minimum set indicator 725 and the maximum allowed E-TFCI 730, the UE 705 transmits a MAC-e PDU filled with data of the MAC-d flow using an E-TFCI equal to or lower than the maximum allowed E-TFCI. The UE 705 operates in the manner illustrated in FIG 6 and the UE operation will not be described. One thing to note in the UE operation is that the UE 705 determines whether a minimum set PDU exists according to the minimum set indicator 725 and the maximum allowed E-TFCI 730 in the MAC-d flow configuration information of the E-DCH setup message 720. That is, the UE decides 730 as a minimum set PDU data stored in relation to the MAC-d flow indicated by the minimum set indicator 725 or the maximum allowed E-TFCI.

While the configuration information of a MAC-d flow set for minimum set transmission contains both a minimum set indicator and a maximum allowed E-TFCI in an E-DCH setup message in FIG 7, it can be further contemplated as another exemplary embodiment that the RNC includes only the maximum allowed E-TFCI in the MAC-d flow configuration information. Thus the UE determines whether minimum set transmission is allowed for the MAC-d flow depending on the presence or absence of the maximum allowed E-TFCI in the MAC-d flow configuration information.

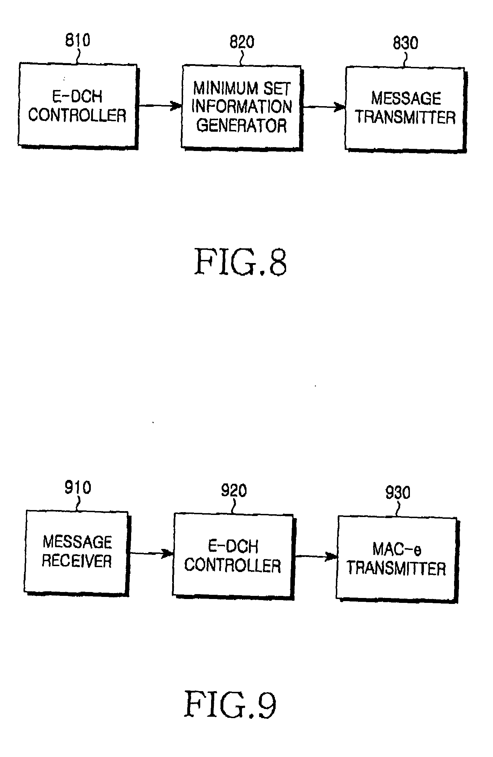

FIG 8 is a block diagram of a transmitter in then RNC, for defining an E-DCH minimum set and notifying the E-DCH minimum set according to an exemplary embodiment of the present invention.

Referring to FIG 8, an E-DCH controller 810 defines an object to be transmitted irrespective of transmission resources allocated by a scheduling command or available transmit power, as a minimum set. The object can be a MAC-d flow, a logical channel or a transmission buffer. The E-DCH controller 810 defines a MAC-d flow, a logical channel or a transmission buffer that has delay-sensitive data or relatively significant data as the minimum set. For example, the E-DCH controller 810 defines a MAC-d flow connected to a logical channel that carries an RRC message as the minimum set. For another example, the controller 810 defines Signaling Radio Bearers (SRBs) or Guaranteed Bit Rate (GBR) services as the minimum set.

A minimum set information generator 820 sets minimum set information indicating whether data from the object to be set up is transmittable irrespective of allocated transmission resources or available transmit power in configuration information of the object. In accordance with an exemplary embodiment of the present invention as described above, the minimum set information includes a minimum set indicator indicating a MAC-d flow, a logical channel or a transmission buffer set as a minimum set can be transmitted irrespective of allocated transmission resources or available transmit power. The minimum set information generator 820 sets the minimum set indicator to 1 or simply includes the minimum set indicator in the configuration information in order to indicate that the object is set for minimum set transmission. In another exemplary embodiment, the minimum set information includes information indicating a maximum allowed MAC-e PDU size for a MAC-d flow set as the minimum set.

A message transmitter 830 transmits a setup message for configuring the object, including the configuration information with the minimum set information.

FIG 9 is a block diagram of a receiver in the UE, for minimum set transmission of the E-DCH according to an exemplary embodiment of the present invention.

Referring to FIG 9, a message receiver 910, which is the counterpart of the message transmitter 830 of FIG 8, receives configuration information for setting up an E-DCH setup-associated MAC-d flow, logical channel or transmission buffer. The configuration information may include minimum set information indicating whether data from an object to be set up can be transmitted irrespective of transmission resources allocated by a scheduling command or available transmit power. In an exemplary embodiment of the present invention, the minimum set information includes a minimum set indicator indicating the MAC-d flow, logical channel or transmission buffer can be transmitted irrespective of allocated transmission resources or available transmit power. In another exemplary embodiment, the minimum set information includes information indicating a maximum allowed MAC-e PDU size for the MAC-d flow set as a minimum set.

An E-DCH controller 920 configures a MAC-e layer including the MAC-d flow, logical channel or transmission buffer according to the configuration information in a MAC-e transmitter 930, and identifies an object corresponding to the minimum set information. If the minimum set indicator is 1 or the minimum set indicator is simply included in the configuration information, the E-DCH controller 920 decides that the object to be set up is a minimum set.

After configuring the MAC-e layer, the E-DCH controller 920 determines every TTI whether there are transmission resources allowed by a scheduling command and available transmit power. In the presence of the transmission resources and available transmit power, the MAC-e transmitter 930 transmits E-DCH data. In the presence of the allowed transmission resources or available transmit power for a new TTI, the E-DCH controller 920 checks whether there is a minimum PDU for minimum set transmission. While not shown specifically, the E-DCH controller 920 checks whether a transmission buffer (not shown) in the RLC layer or the MAC-e layer has minimum set PDUs.

In the presence of a minimum set PDU, the MAC-e transmitter 930 reads out the minimum set PDU from the transmission buffer, fills a MAC-e PDU with the minimum set PDU, and transmits the MAC-e PDU on the uplink. If there are a plurality of minimum set PDUs, the MAC-e transmitter 930 transmits a minimum set PDU with the highest priority level. When a maximum allowed E-TFCI is included in the configuration information, the MAC-e transmitter 930 fills the MAC-e PDU with minimum set PDUs at or below the maximum allowed E-TFCI.

In accordance with the exemplary embodiments of the present invention as described above, the decrease of uplink transmission efficiency may be prevented by setting minimum set PDUs and transmitting a minimum set PDU with a higher priority in a mobile communication system supporting an uplink packet data service. Particularly, since the range of data to be autonomously transmitted from a UE without Node B-controlled scheduling is minimized, inefficiency involved in non-scheduled data transmission is minimized.

While the invention has been shown and described with reference to certain exemplary embodiments thereof, it will be understood by those skilled in the art that various changes in form and details may be made therein without departing from the spirit and scope of the invention as defined by the appended claims.

**Claims**

1. A method of supporting uplink data transmission without Node B-controlled scheduling in a mobile communication system, the method comprising the steps of

   defining a media access control-data (MAC-d) flow transmittable without a scheduling command from a Node B;
   setting minimum set information in configuration information for configuring the MAC-d flow, the minimum set information indicating that the MAC-d flow can be transmitted without the scheduling command from the Node B; and
   transmitting to a user equipment (UE) the configuration information comprising the minimum set information by a setup message for setting up the MAC-d flow.

2. The method of claim 1, wherein the minimum set information comprises a minimum set indicator indicating whether the MAC-d flow can be transmitted without the scheduling command from the Node B.

3. The method of claim 1, wherein the minimum set information comprises information indicating a maximum allowed media access control-enhanced protocol data unit (MAC-e PDU) size for the MAC-d flow.

4. The method of claim 3, wherein the information indicating the maximum allowed MAC-e PDU size information comprises a maximum allowed enhanced uplink dedicated channel-transport format combination indicator (E-TFCI).

5. The method of claim 1, wherein the MAC-d flow is mapped onto a logical channel for carrying delay-sensitive data or data requiring relatively high quality of service (QoS).

**6.** The method of claim 1, wherein the MAC-d flow is mapped onto a logical channel for carrying a radio resource control (RRC) message.

**7.** An apparatus for supporting uplink data transmission without Node B-controlled scheduling in a mobile communication system, the apparatus comprising:

a controller for defining a media access control-data (MAC-d) flow transmittable without a scheduling command from a Node B;
a minimum set information generator for setting minimum set information in configuration information for configuring the MAC-d flow, the minimum set information indicating that the MAC-d flow can be transmitted without the scheduling command from the Node B; and
a message transmitter for transmitting to a user equipment (UE) the configuration information comprising the minimum set information by a setup message for setting up the MAC-d flow.

**8.** The apparatus of claim 7, wherein the minimum set information comprises a minimum set indicator indicating whether the MAC-d flow can be transmitted without the scheduling command from the Node B.

**9.** The apparatus of claim 7, wherein the minimum set information comprises information indicating a maximum allowed media access control-enhanced protocol data unit (MAC-e PDU) size for the MAC-d flow.

**10.** The apparatus of claim 9, wherein the information indicating the maximum allowed MAC-e PDU size information comprises a maximum allowed enhanced uplink dedicated channel-transport format combination indicator (E-TFCI).

**11.** The apparatus of claim 7, wherein the MAC-d flow is mapped onto a logical channel for carrying delay-sensitive data or data requiring relatively high quality of service (QoS).

**12.** The apparatus of claim 7, wherein the MAC-d flow is mapped onto a logical channel for carrying a radio resource control (RRC) message.

**13.** A method of transmitting uplink data without Node B-controlled scheduling in a mobile communication system, the method comprising the steps of:

receiving configuration information of a media access control-data (MAC-d) flow, the configuration information comprising minimum set information indicating that the MAC-d flow can be transmitted without a scheduling command from a Node B;
determining whether the MAC-d flow comprises data in the absence of transmission resources allowed for a new transmission period by the scheduling command from the node B; and
transmitting the data on an uplink in the new transmission period without the scheduling command from the Node B if the MAC-d flow has data.

**14.** The method of claim 13, wherein the minimum set information comprises a minimum set indicator indicating whether the MAC-d flow can be transmitted without the scheduling command from the Node B.

**15.** The method of claim 13, wherein the minimum set information comprises information indicating a maximum allowed media access control-enhanced protocol data unit (MAC-e PDU) size for the MAC-d flow.

**16.** The method of claim 15, wherein the information indicating the maximum allowed MAC-e PDU size information comprises a maximum allowed enhanced uplink dedicated channel-transport format combination indicator (E-TFCI).

**17.** The method of claim 13, wherein the transmission step comprises the step of allocating transmission resources to data comprising the highest priority level transmittable without the scheduling command from the Node B and transmitting the data on the uplink.

**18.** An apparatus for transmitting uplink data without Node B-controlled scheduling in a mobile communication system, the apparatus comprising:

a message receiver for receiving configuration information of a media access control-data (MAC-d) flow, the configuration information comprising minimum set information indicating that the MAC-d flow can be transmitted without a scheduling command from a Node B;
a controller for determining whether the MAC-d flow comprises data in the absence of transmission resources allowed for a new transmission period by the scheduling command from the node B; and
a data transmitter for transmitting the data on an uplink in the new transmission period without the scheduling command from the Node B if the MAC-d flow has data.

**19.** The apparatus of claim 18, wherein the minimum set information comprises a minimum set indicator indicating whether the MAC-d flow can be transmitted without the scheduling command from the Node B.

**20.** The apparatus of claim 18, wherein the minimum set information comprises information indicating a maximum allowed media access control-enhanced protocol data unit (MAC-e PDU) size for the MAC-d flow.

21. The apparatus of claim 20, wherein the information indicating the maximum allowed MAC-e PDU size information comprises a maximum allowed enhanced uplink dedicated channel-transport format combination indicator (E-TFCI).

22. The apparatus of claim 18, wherein the data transmitter allocates transmission resources to data comprising the highest priority level transmittable without the scheduling command from the Node B and transmitting the data on the uplink.

FIG.1A

FIG.1B

FIG.2

EP 1 643 694 A2

NODE B

310

E-DCH SETUP

312

REPORT BUFFER STATUS, REQUESTED DATA RATE,
AND UPLINK CHANNEL CONDITION INFORMATION

300

314

Rate Indication

316

UL Packet data transmission

302

FIG.3

EP 1 643 694 A2

402

405a 405b 405c 405d 405e

| RLC 1 | RLC 2 | RLC 3 | | RLC 4 | RLC 5 |

410a — C/T mux          C/T mux — 410b

MAC-e

Scheduling/Priority Handing Block

425a                                  425b

buffer distributor              buffer distributor

430a        430b              430c        430d

| Transmission buffer 1 | Transmission buffer 2 | Transmission buffer 3 | Transmission buffer 4 |

420                                                    — 415

435 — MAC-e PDU composition block

440 — HARQ entity

transmission

# FIG.4

505

510

515

| UE | Node B | RNC |
|---|---|---|

520

525

SETUP MESSAGE [minimum set indicator]

# FIG.5

```
                            ┌─────────┐
                            │  START  │
                            └────┬────┘
                                 │
            ┌────────────────────▼────────────────────┐
            │   START OPERATION BEFORE NEW TTI         │──605
            └────────────────────┬────────────────────┘
                                 │
                                 │         610
                            ◇─────────────◇          YES
                          ◇  Scheduled by Node B for ◇──────────────┐
                           ◇   the next TTI?        ◇               │
                             ◇─────────────◇                        │
                                 │NO                                │
                                 │      630                         │
                      NO    ◇─────────────◇                         │
              ┌───────────◇  Minimum set PDU? ◇                     │
              │            ◇─────────────◇                          │
              │                  │YES                               │
              │                  │                 ┌────────────────▼────────────────┐
    ┌─────────▼─────────┐        │                 │ Determining the size of MAC-e PDU│──615
    │  No transmission  │──635   │                 │ corresponding to the Node B scheduling│
    └─────────┬─────────┘        │                 └────────────────┬────────────────┘
              │                  │                                  │
              │        ┌─────────▼─────────┐        ┌───────────────▼────────────────┐
              │        │ Composing MAC-e PDU using a MAC-d│──640  │ Composing MAC-e PDU using a MAC-d│──620
              │        │ PDU from the highest priority│        │ PDUs from the highest priority │
              │        └─────────┬─────────┘        │   until MAC-e PDU fills up      │
              │                  │                  └───────────────┬────────────────┘
              │        ┌─────────▼─────────┐        ┌───────────────▼────────────────┐
              │        │ Transmit the MAC-e PDU│──645  │   Transmit the MAC-e PDU       │──625
              │        │   at the TTI boundary │        │    at the TTI boundary         │
              │        └─────────┬─────────┘        └───────────────┬────────────────┘
              │                  │                                  │
              └──────────────────┼──────────────────────────────────┘
                                 │
                            ┌────▼────┐
                            │   END   │
                            └─────────┘
```

FIG.6

705                          710                          715

UE                          Node B                        RNC

              720         725              730

SETUP MESSAGE [minimum set indicator, maximum allowed E-TFCI]

FIG.7

FIG.8

FIG.9